# EUROPEAN PATENT SPECIFICATION

(11) **EP 3 200 991 B1**
(45) Date of publication and mention of the grant of the patent: **20.12.2023**
(21) Application number: 15787332.4
(22) Date of filing: 01.10.2015
(51) Int. Cl.: B32B 7/12, B32B 27/08, B32B 27/18, B32B 27/30, B32B 27/32, B32B 27/34, B32B 27/36

(54) **A MULTILAYER STRUCTURE AND THERMOFORMED ARTICLES MADE THEREFROM**
MEHRSCHICHTIGE STRUKTUR UND WARMGEFORMTE GEGENSTÄNDE DARAUS
STRUCTURE MULTICOUCHE ET ARTICLES THERMOFORMÉS FABRIQUÉS À PARTIR DE CELLE-CI

(30) Priority: 01.10.2014 US 201462058197 P
(43) Date of publication of application: 09.08.2017
(73) Proprietor: Dow Global Technologies LLC, Midland, MI 48674 (US)
(72) Inventor: CHOPIN, Lamy J., Missouri City, TX 77459 (US); DEPLACE, Fanny, Lake Jackson, TX 77566 (US); WALTHER, Brian W., Clute, TX 77531 (US); HERNANDEZ, Claudia, Lake Jackson, TX 77566 (US); MARTINEZ BARRENECHE, Felipe, Houston, TX 77082 (US)
(74) Representative: Boult Wade Tennant LLP
(86) International application number: PCT/US2015/053458
(87) International publication number: WO 2016/054353

(56) References cited:
- EP-A2- 0 832 928
- EP-A2- 0 842 978
- WO-A2-2014/113623
- WO-A2-2014/113623

## Description

### Field of Invention

The disclosure relates to a multilayer structure and thermoformed articles made therefrom.

### Background of the Invention

The use of multilayer structures and/or packages made with high-barrier (i.e. low ethylene content, below 34 mole percent (mol%) ethylene) ethylene vinyl alcohol polymers (EVOH) is desirable in order to achieve a good shelf life for sensitive food contents. However when these polymers are very stiff and brittle they have a tendency to crack and fracture, i.e. to fibrillate when they are oriented / stretched during thermoforming. Many current thermoforming film structures use EVOH grades having equal to or greater than 38 mol% units derived from ethylene. Such high ethylene content EVOH polymers are slightly less stiff, but when used in multilayer structures usually must be encapsulated between two polyamide layers to provide support and allow smooth thinning during thermoforming as well as to improve formability and overall toughness to the multilayer structure. One typical thermoformed barrier EVOH containing multilayer structures have a polyethylene layer-tie layer-polyamide layer-EVOH layer-polyamide layer-tie layer-polyethylene layer structure.

WO-A-2014/113623 relates to a film comprising at least one barrier layer, said barrier layer comprising: (a) at least 5 percent, by weight of the layer, of an anhydride and/or carboxylic acid functionalized ethylene/alpha-olefin interpolymer having a density in the range of from 0.855 to 0.900 g/cm³; and having a melt index (190 °C/2.16 kg) of greater than 200 g/10 min; and (b) at least 60 percent, by weight of the layer, of EVOH.

EP-A-832,928 relates to a thermoformable multilayer film with a total thickness of 50 to 300 µm, comprising a layer of a resin composition with a thickness of 3 to 50 µm, said resin composition comprising 60 to 99 wt% of ethylene-vinyl alcohol copolymer and 40 to 1 wt% of ethylene-(meth)acrylic acid copolymer, said ethylene-(meth)acrylic acid copolymer being dispersed in the form of particles in the matrix of said ethylene-vinyl alcohol copolymer, wherein said ethylene-vinyl alcohol copolymer having an ethylene content of 20 to 60 mol% and a degree of hydrolysis of not less than than 90%, and said ethylene-(meth)acrylic acid copolymer containing 1 to 30 wt% of (meth)acrylic acid.

There remains a need for a high barrier EVOH based multilayer structures useful in thermoforming applications and which further exhibits good toughness and allows smooth draw down for excellent barrier retention of the EVOH without the need of polyamide layers.

### Summary of the Invention

The disclosure is for a thermoformed multilayer structure and thermoformed articles made therefrom.

This invention provides a thermoformed multilayer structure comprising at least one barrier layer, said barrier layer comprising less than or equal to 12 percent, by weight of the barrier layer, of an anhydride and/or carboxylic acid functionalized ethylene/alpha-olefin interpolymer having a density in the range of from 0.855 to 0.900 g/cm³; and having a melt viscosity less than 50,000 cP at 177 °C (350 °F); and at least 60 percent, by weight of the barrier layer, of EVOH having from 10 to 30 mole percent units derived from ethylene monomer, wherein the barrier layer has a thickness of from 75 to 150 µm (microns).

In another embodiment, the disclosure provides a thin thermoformed article made from the multilayer structure.

In yet another embodiment, the disclosure provides a thick thermoformed article made from the multilayer structure.

### Detailed Description of the Invention

The disclosure provides a multilayer structure and thermoformed articles made therefrom.

As used herein, the term ethylene/alpha-olefin interpolymer means a polymer prepared by the polymerization of ethylene and an alpha-olefin and optionally one or more additional monomers. Ethylene/alpha-olefin interpolymers include ethylene/alpha-olefin copolymers prepared only from ethylene monomer and an alpha-olefin monomer. Ethylene/alpha-olefin interpolymers also include polymers prepared from ethylene monomer, an alpha-olefin monomer and at least one more monomer which may also be an alpha-olefin.

In a first embodiment, the invention provides a thermoformed multilayer structure comprising at least one barrier layer, said barrier layer comprising less than or equal to 12 percent, by weight of the barrier layer, of an anhydride and/or carboxylic acid functionalized ethylene/alpha-olefin interpolymer having a density in the range of from 0.855 to 0.900 g/cm³; and having a melt viscosity less than 50,000 cP at 177 °C (350 °F); and at least 60 percent, by weight of the barrier layer, of EVOH having from 10 to 30 mole percent units derived from ethylene monomer, wherein the barrier layer has a thickness of from 75 to 150 µm (microns).

The amount of the functionalized ethylene/alpha-olefin interpolymer can be from an upper limit of 12 percent by weight (wt%), or in the alternative, 11 wt%, or in the alternative 10 wt%, or in the alternative, 9 wt%.

Any anhydride and/or carboxylic acid functionalized ethylene/alpha-olefin interpolymer may be used. Such interpolymers include, for example, ethylene/alpha-olefin interpolymers functionalized with maleic anhydride.

The density of the anhydride and/or carboxylic acid functionalized ethylene/alpha-olefin interpolymer can be from a lower limit of 0.855, 0.865, 0.875, 0.885 or 0.895 g/cm³ to an upper limit of 0.860, 0.870, 0.880, 0.890 or 0.900 g/cm³. For example, the density of the anhydride and/or carboxylic acid functionalized ethylene/alpha-olefin interpolymer can range from 0.855 to 0.900 g/cm³, or in the alternative, from 0.855 to 0.875 g/cm³, or in the alternative, from 0.875 to 0.900 g/cm³, or in the alternative, from 0.865 to 0.885 g/cm³.

The anhydride and/or carboxylic acid functionalized ethylene/alpha-olefin interpolymer has a composition, comprising at least one functionalized ethylene interpolymer, and wherein the functionalized ethylene interpolymer is formed from at least one unsaturated compound containing at least one heteroatom, and where the ethylene interpolymer that has a melt viscosity less than 50,000 cP, preferably or in the alternative, less than 40,000 cP, or in the alternative, less than 30,000 cP at 177°C (350 °F) , and a molecular weight distribution (Mw/Mn) from about 1 to 5, or in the alternative 1.1 to 5, or in the alternative from 1 to 4, or in the alternative from 1 to 3.5, or in the alternative from 1 to 3.5, or in the alternative from 1.1 to 3.5. In one embodiment, the ethylene interpolymer is an ethylene/alpha-olefin interpolymer.

In one embodiment, the at least one unsaturated compound is a carbonyl-containing compound. In a further aspect, the carbonyl-containing compound is selected from the group consisting of maleic anhydride, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, esters thereof, imides thereof, salts thereof, and Diels-Alder adducts thereof. In a further embodiment, the unsaturated compound is an anhydride, and preferably maleic anhydride.

The functionalized ethylene interpolymer has a melt viscosity at 177 °C (350 °F) less than 50,000 cP, or in the alternative less than 40,000 cP, or in the alternative less than 30,000 cP, or in the alternative less than 20,000 cP. In another embodiment, the functionalized ethylene interpolymer has a melt viscosity at 177 °C (350 °F) greater than 2,000 cP, or in the alternative greater than 3,000 cP, or in the alternative greater than 4,000 cP. The functionalized ethylene interpolymer is a functionalized ethylene/.alpha.-olefin interpolymer.

In another embodiment, the ethylene interpolymer, and preferably an ethyelene/alpha-olefin interpolymer, has a melt viscosity at 177 °C (350 °F) less than 20,000 cP, and the functionalized ethylene/alpha-olefin interpolymer, has a melt viscosity at 177 °C (350 °F) less than 25,000 cP. In a further embodiment, both the ethylene interpolymer, in one embodiment an ethylene/alpha-olefin interpolymer, and the functionalized ethylene/alpha-olefin interpolymer, each has, independently, a melt viscosity at 177 °C (350 °F) greater than 2,000 cP, or in the alternative greater than 3,000 cP, or in the alternative greater than 4,000 cP.

In another embodiment, the ethylene interpolymer, and in one embodiment, an ethyelene/alpha-olefin interpolymer, has a melt viscosity at 177 °C (350 °F) less than 15,000 cP, and the functionalized ethylene/alpha-olefin interpolymer, has a melt viscosity at 177 °C (350 °F) less than 20,000 cP. In a further embodiment, both the ethylene interpolymer, in one embodiment an ethylene/alpha-olefin interpolymer, and the functionalized ethylene/alpha-olefin interpolymer, each has, independently, a melt viscosity at 177 °C (350 °F) greater than 2,000 cP, or in the alternative greater than 3,000 cP, or in the alternative greater than 4,000 cP.

The barrier layer further comprises at least 60 percent by weight of the barrier layer, of EVOH having from 10 to 30 mole percent units derived from ethylene monomer. The layer comprises at least 60 wt% EVOH, or in the alternative, at least 65 wt%, or in the alternative, at least 70 wt%, or in the alternative, at least 75 wt%, or in the alternative, at least 77 wt%. The EVOH has from 10 to 30 mole percent units derived from ethylene monomer. The For example, the amount of units derived from ethylene monomer can be from 24 to 30 mol%.

In an alternative embodiment, the invention provides the multilayer structure according to any one of the embodiments disclosed herein except that the barrier layer further comprises one or more oxygen scavengers or other functional additives. Exemplary oxygen scavengers include sodium sulfite, sodium pyrosulfite, sodium thiosulfate, sodium dithionite and sodium hypophosphite. Exemplary functional additives include calcium oxide, talc, and other mineral fillers.

The thickness of the barrier layer can range from a lower limit 1, 85, 105, 125 or 145 µm (microns) to an upper limit of 90, 110, 130 or 150 µm (microns).

In an alternative embodiment, the invention provides the multilayer structure according to any one of the embodiments disclosed herein except that the multilayer structure further comprises an external layer made from a resin which comprises linear low density polyethylene, ultra low density polyethylene, propylene/ethylene interpolymer, propylene/alpha-olefin interpolymer, polyethylene terephthalate, polypropylene, polylactic acid, or any combination thereof.

In an alternative embodiment, the invention provides the multilayer structure according to any one of the embodiments disclosed herein except that the multilayer structure further comprises one or more additional layers which comprise a polyamide.

In an alternative embodiment, the invention provides the multilayer structure according to any one of the embodiments disclosed herein except that the multilayer structure further comprises a seal layer made from a resin which comprises linear low density polyethylene, low density polyethylene, ultra low density polyethylene, propylene/ethylene interpolymer, propylene/alpha-olefin interpolymer, or any combination thereof.

In an alternative embodiment, the invention provides the multilayer structure according to any one of the embodiments disclosed herein except that the multilayer structure further comprises a tie layer adjacent to the barrier layer.

In an alternative embodiment, the invention provides the multilayer structure according to any one of the embodiments disclosed herein except that the multilayer structure has a thickness of from 260 to 3000 µm (microns). The thickness of the multilayer structure can be from a lower limit of 260, 560, 1350, 2000 or 2750 µm (microns) to an upper limit of 350, 750, 1500, 2500 or 3000 µm (microns). For example, the thickness of the multilayer structure can be from 260 to 3000 µm (microns), or in the alternative, from 260 to 1750 µm (microns), or in the alternative, from 1750 to 3000 µm (microns), or in the alternative, from 500 to 2250 µm (microns).

In another embodiment, the invention further provides a thermoformed article comprising the multilayer structure having a thickness from 260 to 3000 µm (microns) wherein the article is a tray or container. Trays or containers include for example, deep thermoformed articles such as are used for fruit, cheese sauce, and pet food packaging.

In an alternative embodiment, the instant invention provides a multilayer structure having a thickness from 150 to 260 µm (microns). The thickness of the multilayer structure can range from a lower limit of 150, 175, 200, 225, or 250 µm (microns) to an upper limit of 160, 185, 210, 235 or 260 µm (microns).

In one embodiment, the barrier film has a five layer structure, illustrated as A/B/C/D/E wherein A is an external layer, B is a first tie layer, C is the barrier layer, D is a second tie layer and E is a seal layer. The external layer may be made from one or more resins selected from the group consisting of linear low density polyethylene, ultra low density polyethylene, propylene/ethylene interpolymers, propylene/alpha olefin copolymers and blends of any two or more thereof. The first and second tie layers may have the same or different compositions. Any appropriate tie layer material may be used. Exemplary tie layer composition includes maleic anhydride functionalized polyolefins. Any appropriate material may be used for the seal layer, including for example, linear low density polyethylene, propylene/ethylene interpolymers, propylene/alpha olefin copolymers and blends of any two or more thereof.

### Examples

The following examples illustrate the present invention but are not intended to limit the scope of the invention. In the examples which follow, the term "reactive modifier" refers to an anhydride and/or carboxylic acid functionalized ethylene/alpha-olefin interpolymer having a density in the range of from 0.855 to 0.900 g/cm³; and having a melt viscosity less than 50,000 cP at 177°C (350 °F).

### Reference example 1:

The EVOH polymer, EVOH 1 contains 32 mol % ethylene, and is commercially available from Kuraray America, Inc. and sold under the trade name of EVAL* polymer. The reactive modifier used in the Example is prepared as follows:

### Synthesis of Component A - MAH-g-EO1:

The following materials are used to make the reactive modifier used in the Examples:
1. Base resin is low molecular weight ethylene-octene copolymer having a density of 0.87 g/cc;
2. Maleic Anhydride (MAH);
3. HYDROBRITE 380 which is a hydrotreated paraffinic oil to dilute peroxide as needed. (1: 1 ratio of peroxide:oil) and which is commercially available from Sonneborn, LLC (Parsippany, NJ, USA); and
4. LUPEROX 101 which is 2,5-bisb(tert-butylperoxy)-2,5-dimethylhexane (290.44 g/mol) which is commercially available from Arkema, Inc. (King of Prussia, PA, USA).

The reactive modifier is made using a co-rotating twin screw extruder (TSE). The process is summarized in the following steps: (a) base resin polymer pellets are fed into the extruder hopper of the extruder by a gravimetrically, controlled auger feeder, at the desired polymer feed rate; (b) MAH is injected into the barrel; (c) peroxide is added and may be diluted with mineral oil solution as needed, at a target feed rate; (d) kneading blocks distribute the reactive ingredients and heated the polymer melt through mechanical energy dissipation, and the reaction occurs following thermal decomposition of peroxide initiator; (e) volatile unreacted components and byproducts are removed at a vacuum port; (f) the melt is cooled in the final barrel section and is fed to a gear pump; (g) the gear pump feeds a die, from which the melt goes to an underwater pelletizer. A pellet slurry cooling line of sufficient length is used to achieve residence time greater than 60 seconds, to cool pellets to less than 25°C. The pelletized product is dried and collected.

Once the reactive modifier has been made the EVOH resin compounded with the reactive modifier is prepared using a large scale Century- ZSK-40 37.12L/D extruder with 9 barrels using a mixing screw design. The underwater diverter valve assembly is equipped with a 6 hole (3.175 mm hole diameter) under water die. The first barrel section is set at 25°C whereas the remaining barrel zones are set between 25°C and 225°C. The screw speed is set to establish the targeted feed rate of 68 kg/hr. This results in melt temperatures between 220-229°C. The material is underwater pelletized used a Gala underwater pelletizer.

After compounding the polymer is stored in a moisture proof bag and further dried prior to the blown film fabrication step. The sample is dried using a hot air recirculation oven using the recommended drying temperatures for EVOH.

A coextruded 5 layer film sample was produced on an Alpine 7-Layer blown film run by using the same polymer feed in two of the 7 layers represented as layers A/B/C/D/E/F/G with the "A" layer being in the inside of the bubble. The 5 layer structure is achieved by combining the "A" and "B" layers and the "F" and "G" layers. The individual feed lines are all 50 mm 30:1 LID grooved feed extruders where each extruder was fed from a 4 component blender. The 7 extruders combined produce a feed to the 75 mm 7-layer flat die (30/11/18/11/30) of 23 kg/hr. The blow up ratio is 2.38. The barrel temperatures range from 166°C to 232°C. The standard frost line height is 30 cm. The film thickness is maintained using an auto profile air ring system and an IBC.

### Results

No characterization of the compounded pellets is done. All of the data is for blown film articles.

A 5 layer structure is produced using the Alpine 7 layer line with a target structure of 34 µm (micron) thickness. All of the compounds were prepared using the single screw compounding line.
A: 40.8% of the film thickness is layer A which comprises a polyethylene (0.917 density, 0.8 MI)
B: 6.6% of the film thickness is layer B which comprises a polyethylene based tie layer (0.920 density, 1 MI)
C: 5.5% of the film thickness is layer C which comprises a blend of 90wt% EVOH1 + 10wt% reactive modifier)
D: 6.6% of the film thickness is layer D which comprises a polyethylene based tie layer (0.920 density, 1 MI)
E: 40.8% of the film thickness is layer E which comprises a polyethylene (0.917 density, 0.8 MI)

This structure was produced and the film was tested using conventional film testing protocols as indicated in Table 1.

**Table 1**

| **Property** | **ASTM Method** | **Unit** | **Example 1 (90% EVOH1 + 10% reactive modifier in layer C)** |
|---|---|---|---|
| Dart | D1709 | gram | 247 |
| Secant Modulus CD at 1% | D882 | MPa (PSI) | 363.09 (52662) |
| Secant Modulus MD at 1% | D882 | MPa (PSI) | 350.03 (50767) |
| Elmendorf Tear CD | D1922 | gram | 2064 |
| Elmendorf Tear MD | D1922 | gram | 1228 |

### Reference example 2:

A multi-layer structure, having layers ABCDEFGGFEDCBA as shown in Table 2, is produced using an Alpine 7 layer line to make two seven layer films which are then collapsed with a target structure of 152 µm (microns) (6 mils) thickness. All of the compounds were prepared using the single screw compounding line and are obtained by collapsing the blown bubble.

**Table 2**

| **Layer** | **Component** | **Layer thickness** (µm) ((mils)) | **% of total film thickness** | **1₂ or MFR* g/10 min** | **Density g/cc** |
|---|---|---|---|---|---|
| A | PP1 | 18.3 (0.72) | 12 | 0.7 | 0.893 |
| B | PE2 | 13.7 (0.54) | 9 | 0.7 | 0.909 |
| C | Tie Layer | 6.86 (0.27) | 4.5 | 1.7 | 0.91 |
| D | EVOH2 | 7.62 (0.3) | 5 | 1.7 | 1.17 |
| E | Tie layer | 6.86 (0.27) | 4.5 | 1.7 | 0.91 |
| F | PE2 | 9.14 (0.36) | 6 | 0.7 | 0.909 |
| G | PE3 | 13.7 (0.54) | 9 | 3 | 0.875 |
| G | PE3 | 13.7 (0.54) | 9 | 3 | 0.875 |
| F | PE2 | 9.14 (0.36) | 6 | 0.7 | 0.909 |
| E | Tie layer | 6.86 (0.27) | 4.5 | 1.7 | 0.91 |
| D | EVOH2 | 7.62 (0.3) | 5 | 1.7 | 1.17 |
| C | Tie layer | 6.86 (0.27) | 4.5 | 1.7 | 0.91 |
| B | PE2 | 13.7 (0.54) | 9 | 0.7 | 0.909 |
| A | PP1 | 18.3 (0.72) | 12 | 0.7 | 0.893 |
| Total | | 152 (6) | 100 | | |

| | | | | | |
|---|---|---|---|---|---|
| *I₂ applies to ethylene-based polymers (PE) and MFR applies to propylene based polymers (PP). PP1 is a blend of 35 wt% rPP 01R25, a random propylene-based copolymer, having a density of 0.9 g/cc (g/cm³)and an MFR of 0.5 g/10 min and 65 wt% of VERSIFY 2000, a propylene - ethylene copolymer, having a density of 0.89 g/cc and an MFR of 0.8 g/10 min. PE2 is a blend 80 wt% ATTANE 4203, an ethylene based polymer, having a density of 0.905 g/cc and an I₂ of 0.85 g/10 min and 20 wt% AGILITY 2001, an ethylene-based polymer, having a density of 0.924 g/cc and an I₂ of 0.4 g/10 min. PE3 is 100wt% AFFINITY KC8852, an ethylene-octene copolymer, having a density of 0.875 g/cc and an I₂ of 3.0 g/10 min. Tie layers are each 100 % AMPLIFY TY 1451, a functional polymer, having a density of 0.91 g/cc and an I₂ of 1.7 g/10 min. The rPP, ATTANE, AGILITY, AMPLIFY, and VERSIFY polymers are commercially available from The Dow Chemical Company (Midland, MI, USA). The polymer EVOH2 contain 38 mol% ethylene and is commercially available from Kuraray America, Inc and sold under the trade name of EVAL* polymer. | | | | | |

### Results

Corner thickness on thermoformed trays have been measured on two samples, one without modifier and one with 7wt% modifier in the EVOH layer, as shown in Table 3. The thickness of the corners is higher when the EVOH is blended with the modifier.

**Table 3**

| | **Example 2** | |
|---|---|---|
| | **Example 2.1 (100% EVOH2 in layers C & G)** | **Example 2.2 (93% EVOH2 + 7% reactive modifier in layers C & G)** |
| average 100*corner thickness/film thickness | 13% | 16% |
| stdev 100*corner thickness/film thickness | 3% | 3% |

### Example 3:

Coextruded 3 layer film samples (having the layer structure ABC) were produced on a Collin cast line by using the same polymer feed in the two skin layers and an EVOH blend in the core layer. The output is 12 kg/h, air gap 2.54 cm (1 inch), melt temperature 230 °C, die gap 1270 µm (50 mils), the sheet thickness is 1270 µm (50 mils) and the temperature of the chill rolls is 35°C. The film samples of Example 3 have the structure shown below:
A: 45% of the film thickness is layer A which comprises 75 wt% D115A and 25 wt% tie layer
B: 10% of the film thickness is layer B which comprises 100% EVOH3 or EVOH4 (or 95% EVOH3 or EVOH4 + 5% reactive modifier)
C: 45% of the film thickness is layer C which comprises 75wt% D115A and 25wt% tie layer

The tie layer used in the films of Example 3 was a functional polymer having a density of 0.875 g/cc and an I₂ of 1.3 g/10 min. The polymers EVOH3 and EVOH4 contain 27 mol% ethylene and 24 mol% ethylene respectively and are commercially available from Kuraray America, Inc and sold under the trade name of EVAL* polymer. D115A is a polypropylene commercially available from Braskem (Philadelphia, PA, USA) and having an MFR of 11 g/10 min.

### Results

Trays were made on a plug assist thermoformer. To evaluate the thermoformability the thickness of the corners have been measured
- **Example** 3.1: EVOH3 no modifier
- **Example** 3.2: EVOH3 with 5% modifier in the EVOH layer
- **Example** 3.3: EVOH4 no modifier
- **Example** 3.4: EVOH4 with 5% modifier in the EVOH layer

Results, shown in Table 4, show thicker corners when EVOH is blended with the modifier.

**Table 4**

| | **Example 3** | | | |
|---|---|---|---|---|
| | **Example 3.1 (100% EVOH3 in layer B)** | **Example 3.2 (95% EVOH3 + 5% reactive modifier in layer B)** | **Example 3.3 (100% EVOH 4 in layer B)** | **Example 3.4 (95% EVOH4 + 5% reactive modifier in layer B)** |
| average 100 * corner thickness/sheet thickness | 66.13 | 67.25 | 55.82 | 57.80 |
| stdev 100 * corner thickness/sheet thickness | 5.04 | 2.94 | 6.377 | 4.524 |

### Test Methods

Additional Test methods include the following:
Polymer density is measured according to ASTM D792.
Oxygen Transmission Rate was measured according to ASTM D 3985.
Dart Impact resistance was measured according to ASTM D 1709.
Secant Modulus CD and MD were measured according to ASTM D 882.
Elmendorf Tear CD and MD were measured according to ASTM D 1922.
Melt index (1₂, or MI) of an ethylene-based polymer is measured in accordance with ASTM D-1238, condition 190°C/2.16 kg. For high I₂ polymers (I₂ greater than, or equal to, 200 g/10 min, melt index is preferably calculated from Brookfield viscosity as described in U.S. Patents Nos. 6,335,410; 6,054,544; 6,723,810. I₂ (190°C/2.16kg) = 3.6126[10(log(η)-6.6928)/-1.1363]-9.31851, where η = melt viscosity, in cP, at 177 °C (350°F).
MFR (melt flow rate) of propylene based polymers are measured according to ASTM D1238, condition 230°C/2.16 kg.
Corner and sheet thickness testing was conducted using a MAGNA-MIKE 8500 Hall Effect thickness gage, which is commercially available from Olympus Corporation (Waltham, MA, USA).

## Claims

1. A thermoformed multilayer structure comprising at least one barrier layer, said barrier layer comprising
a. less than or equal to 12 percent, by weight of the barrier layer, of an anhydride and/or carboxylic acid functionalized ethylene/alpha-olefin interpolymer having a density in the range of from 0.855 to 0.900 g/cm³; and having a melt viscosity less than 50 Pa.s (50,000 cP) at 177 °C (350 °F); and
b. at least 60 percent, by weight of the barrier layer, of EVOH having from 10 to 30 mole percent units derived from ethylene monomer, wherein the barrier layer has a thickness of from 75 to 150 µm (microns).

2. The multilayer structure according to claim 1 wherein the functionalized ethylene/alpha-olefin interpolymer has been functionalized with maleic anhydride.

3. The multilayer structure according to any one of the preceding claims wherein the barrier layer further comprises one or more oxygen scavengers.

4. The multilayer structure according to any one of the preceding claims wherein the ethylene/alpha-olefin interpolymer has a melt viscosity less than 30 Pa.s (30,000 cP) at 177 °C (350 °F).

5. The multilayer structure according to any one of the preceding claims wherein the EVOH has from 24 to 30 mol% units derived from ethylene.

6. The multilayer structure according to any one of the preceding claims further comprising an external layer made from a resin which comprises linear low density polyethylene, ultra low density polyethylene, propylene/ethylene interpolymer, propylene/alpha-olefin interpolymer, polyethylene terephthalate, polypropylene, polylactic acid, or any combination thereof.

7. The multilayer structure according to any one of the preceding claims further comprising one or more additional layers which comprise a polyamide.

8. The multilayer structure according to any one of the preceding claims further comprising a seal layer made from a resin which comprises linear low density polyethylene, low density polyethylene, ultra low density polyethylene, propylene/ethylene interpolymer, propylene/alpha-olefin interpolymer, or any combination thereof.

9. The multilayer structure according to any of the preceding claims, further comprising a tie layer adjacent to the barrier layer.

10. The multilayer structure according to any one of the preceding claims wherein the multilayer structure has a thickness of from 260 to 3000 µm (microns).

11. A thermoformed article comprising the multilayer structure according to claim 10 wherein the article is a tray or container.

## Patentansprüche

1. Thermogeformte Mehrschichtstruktur, umfassend mindestens eine Sperrschicht, die Sperrschicht umfassend:
a. weniger als oder gleich zu 12 Gew.-%, der Sperrschicht, ein Anhydrid und/oder Carbonsäure-funktionalisiertes Ethylen/alpha-Olefin-Mischpolymerisat, das eine Dichte in dem Bereich von 0,855 bis 0,900 g/cm³ aufweist; und eine Schmelzviskosität von weniger als 50 Pa.s (50.000 cP) bei 177 °C (350 °F) aufweist; und
b. mindestens zu 60 Gew.-%, der Sperrschicht, von EVOH, das zu 10 bis 30 Mol- % Einheiten aufweist, die von Ethylenmonomer abgeleitet sind, wobei die Sperrschicht eine Dicke von 75 bis 150 µm (Mikrometer) aufweist.

2. Mehrschichtstruktur nach Anspruch 1, wobei das funktionalisierte Ethylen/alpha-Olefin-Mischpolymerisat mit Maleinsäureanhydrid funktionalisiert wurde.

3. Mehrschichtstruktur nach einem der vorstehenden Ansprüche, wobei die Sperrschicht ferner einen oder mehrere Sauerstoff-Scavenger umfasst.

4. Mehrschichtstruktur nach einem der vorstehenden Ansprüche, wobei das Ethylen/alpha-Olefin-Mischpolymerisat eine Schmelzviskosität von weniger als 30 Pa.s (30.000 cP) bei 177 °C (350 °F) aufweist.

5. Mehrschichtstruktur nach einem der vorstehenden Ansprüche, wobei das EVOH von zu 24 bis 30 Mol-% Einheiten aufweist, die von Ethylen abgeleitet sind.

6. Mehrschichtstruktur nach einem der vorstehenden Ansprüche, ferner umfassend eine Außenschicht, die aus einem Harz hergestellt ist, die lineares Polyethylen niedriger Dichte, Polyethylen ultraniedriger Dichte, Propylen/Ethylen-Mischpolymerisat, Propylen/alpha-Olefin-Mischpolymerisat, Polyethylenterephthalat, Polypropylen, Polymilchsäure oder eine beliebige Kombination davon umfasst.

7. Mehrschichtstruktur nach einem der vorstehenden Ansprüche, ferner umfassend eine oder mehrere zusätzliche Schichten, die ein Polyamid umfassen.

8. Mehrschichtstruktur nach einem der vorstehenden Ansprüche, ferner umfassend eine Dichtungsschicht, die aus einem Harz hergestellt ist, die lineares Polyethylen niedriger Dichte, Polyethylen niedriger Dichte, Polyethylen ultraniedriger Dichte, Propylen/Ethylen-Mischpolymerisat, Propylen/alpha-Olefin-Mischpolymerisat oder eine beliebige Kombination davon umfasst.

9. Mehrschichtstruktur nach einem der vorstehenden Ansprüche, ferner umfassend eine Bindeschicht angrenzend an die Sperrschicht.

10. Mehrschichtstruktur nach einem der vorstehenden Ansprüche, wobei die Mehrschichtstruktur eine Dicke von 260 bis 3000 µm (Mikrometer) aufweist.

11. Thermogeformtes Erzeugnis, umfassend die Mehrschichtstruktur nach Anspruch 10, wobei das Erzeugnis eine Schale oder ein Behälter ist.

## Revendications

1. Structure multicouche thermoformée comprenant au moins une couche barrière, ladite couche barrière comprenant
a. moins de ou égal à 12 pour cent, en poids de la couche barrière, d'un interpolymère d'éthylène/alpha-oléfine fonctionnalisé par anhydride et/ou acide carboxylique ayant une densité dans la plage allant de 0,855 à 0,900 g/cm³ ; et ayant une viscosité à l'état fondu inférieure à 50 Pa.s (50 000 cP) à 177 °C (350 °F) ; et
b. au moins 60 pour cent, en poids de la couche barrière, d'EVOH ayant de 10 à 30 pour cent molaires d'unités dérivées de monomère éthylène, dans laquelle la couche barrière a une épaisseur allant de 75 à 150 µm (micromètres).

2. Structure multicouche selon la revendication 1, dans laquelle l'interpolymère d'éthylène/alpha-oléfine fonctionnalisé a été fonctionnalisé avec de l'anhydride maléique.

3. Structure multicouche selon l'une quelconque des revendications précédentes, dans laquelle la couche barrière comprend en outre un ou plusieurs agents capteurs d'oxygène.

4. Structure multicouche selon l'une quelconque des revendications précédentes, dans laquelle l'interpolymère d'éthylène/alpha-oléfine a une viscosité à l'état fondu inférieure à 30 Pa.s (30 000 cP) à 177 °C (350 °F).

5. Structure multicouche selon l'une quelconque des revendications précédentes, dans laquelle l'EVOH a de 24 à 30 % en moles d'unités dérivées d'éthylène.

6. Structure multicouche selon l'une quelconque des revendications précédentes, comprenant en outre une couche externe constituée d'une résine qui comprend du polyéthylène linéaire basse densité, du polyéthylène à ultra basse densité, de l'interpolymère de propylène/éthylène, de l'interpolymère de propylène/alpha-oléfine, du téréphtalate de polyéthylène, du polypropylène, de l'acide polylactique, ou de toute combinaison de ceux-ci.

7. Structure multicouche selon l'une quelconque des revendications précédentes, comprenant en outre une ou plusieurs couches supplémentaires qui comprennent un polyamide.

8. Structure multicouche selon l'une quelconque des revendications précédentes, comprenant en outre une couche d'étanchéité fabriquée à partir d'une résine qui comprend du polyéthylène linéaire basse densité, du polyéthylène basse densité, du polyéthylène ultra basse densité, du polymère interpolymère de propylène/éthylène, du interpolymère de propylène/alpha-oléfine, ou toute combinaison de ceux-ci.

9. Structure multicouche selon l'une quelconque des revendications précédentes, comprenant en outre une couche de liaison adjacente à la couche barrière.

10. Structure multicouche selon l'une quelconque des revendications précédentes, dans laquelle la structure multicouche a une épaisseur de 260 à 3000 µm (micromètres).

11. Article thermoformé comprenant la structure multicouche selon la revendication 10, dans lequel l'article est un plateau ou un récipient.
